# EUROPÄISCHE PATENTSCHRIFT

(11) **EP 2 435 243 B1**
(45) Veröffentlichungstag und Bekanntmachung des Hinweises auf die Patenterteilung: **15.01.2014**
(21) Anmeldenummer: 10721704.4
(22) Anmeldetag: 14.05.2010
(51) Int. Cl.: B32B 5/18, B32B 7/12, B32B 15/18, B32B 15/20, B32B 27/40, B32B 15/095

(54) **VERFAHREN ZUR HERSTELLUNG EINES SCHAUMSTOFF-VERBUNDELEMENTS I**
Method for producing a foam compound element
Procédé de fabrication d'un élément composite en mousse I

(30) Priorität: 29.05.2009 EP 09007176; 15.04.2010 EP 10003991
(43) Veröffentlichungstag der Anmeldung: 04.04.2012
(73) Patentinhaber: Bayer Intellectual Property GmbH, 40789 Monheim (DE)
(72) Erfinder: VAN DE BRAAK, Johannes, 53773 Hennef (DE); ABELS, Rene, 51061 Köln (DE); ROERS, Rolf, 51519 Odenthal (DE); HAAS, Peter, 42781 Haan (DE)
(74) Vertreter: BIP Patents
(86) Internationale Anmeldenummer: PCT/EP2010/002964
(87) Internationale Veröffentlichungsnummer: WO 2010/136126

(56) Entgegenhaltungen:
- EP-A1- 1 516 720
- WO-A1-2006/029786

## Beschreibung

Die Erfindung betrifft ein Verfahren zur Herstellung eines Schaumstoff-Verbundelements, umfassend die Schritte des Bereitstellens einer Deckschicht, des Auftragens einer Haftvermittlerschicht auf die Deckschicht, wobei die Haftvermittlerschicht ein modifiziertes Isocyanat umfasst, und des Auftragens einer Polyurethan und/oder Polyisocyanurat umfassenden Schaumstoffschicht auf die Haftvermittlerschicht. Das modifizierte Isocyanat in der Haftvermittlerschicht weist beim Auftragen einen Gehalt an freien Isocyanatgruppen von ≥ 10% bis ≤ 25% auf. Die Erfindung betrifft weiterhin die Verwendung eines modifizierten Isocyanats mit einem Gehalt an freien Isocyanatgruppen von ≥ 10% bis ≤ 25% als Haftvermittler in der Herstellung von Schaumstoff-Verbundelementen sowie durch das erfindungsgemäße Verfahren erhaltene Schaumstoff-Verbundelemente.

Für die kontinuierliche Fertigung von Metallsandwichelementen auf der Basis von Polyurethan-Hartschaumstoffen, also sowohl Polyurethan- als auch Polyisocyanurat-Hartschaumstoffen, ist die Haftfestigkeit von metallischer Deckschicht zum Schaum wichtig, insbesondere wenn es sich bei dem Schaum um einen Polyisocyanurat-Schaum handelt. Im Markt etabliert sind Zweikomponenten-Polyurethan-Haftvermittlersysteme. Die Haftfestigkeiten durch Einsatz solcher Zweikomponenten-Haftvermittlersysteme werden prinzipiell deutlich verbessert, was für die Hersteller der Fertigteile eine Produktverbesserung bedeutet. Insbesondere werden die Langzeitrisiken für ein Haftungsversagen massiv reduziert.

Allerdings können bei der Verarbeitung solcher Zweikomponenten-Haftvermittlersysteme Schwierigkeiten mit einer ausreichenden Homogenisierung der Haflvermittlerkomponenten auftreten. Eine unzureichende Homogenisierung kann im Hinblick auf die Langzeit-Verbundeigenschaften der Metallverbundelemente ein hohes Risiko bedeuten, und zwar in der Weise, dass es bei wechselnden Temperaturen zu Haftungsversagen von Deckschicht zum Schaum kommen kann. Weiterhin kann die Verarbeitung eines Zweikomponenten-Haftvermittlersystems einen relativ hohen Ausschuss zu Beginn einer Produktionsphase bedeuten.

Zur Vermeidung des Risikos mangelhafter Verbundeigenschaften aufgrund nicht ausreichender Homogenisierung der beiden Haftvermittlerkomponenten bieten sich Einkomponenten-Lösungen an. Beispielsweise offenbart EP 1 516 720 A1 die Verwendung eines Polyurethan-Haftvermittlers zur Verbesserung der Haftung zwischen den Schichten eines Verbundelements, enthaltend einen Polyisocyanurat-Schaumstoff und Deckschichten, sowie die Verbundelemente als solche und ein Verfahren zu ihrer Herstellung.

EP 1 593 438 A2 offenbart eine Vorrichtung und Verfahren zur Herstellung von Sandwich-Verbundelementen. Die Vorrichtung besteht wenigstens aus zwei Zuführvorrichtungen für Deckschichten, an die eine Auftragsvorrichtung für einen Haftvermittler, eine Auftragsvorrichtung für eine Kernschicht, eine Fördervorrichtung und eine Ablenkvorrichtung hintereinander geschaltet sind. Die Auftragsvorrichtung für den Haftvermittler besteht wenigstens aus einer Zuführleitung für den Haftvermittler, einen Drehteller mit mindestens einer seitlichen Austrittsöffnung sowie einem Antrieb für den Drehteller. Als Haftvermittler können Einkomponentensysteme, zum Beispiel auf der Basis von Polyurethan, wie NCO-Gruppen enthaltende Prepolymere, eingesetzt werden. Weitere mögliche Einkomponentensysteme basieren auf Polychloropren, Epoxid oder Polyvinylacetat. Der Haftvermittler kann auch aus einem Mehrkomponentensystem, bevorzugt aus einem Zweikomponentensystem aufgebaut sein. Bevorzugte Zweikomponentensysteme sind Polyurethansysteme.

Aufgabe der vorliegenden Erfindung war die Verbesserung der Haftung zwischen dem Schaum und den Deckschichten in Schaumstoff-Verbundelementen. Es besteht folglich der Bedarf an alternativen und verbesserten Verfahren zur Herstellung dieser Verbundelemente, die insbesondere eine verbesserte Haftung zwischen dem Schaum und den Deckschichten in Schaumstoff-Verbundelementen bei gleichzeitig geringerem Auftreten von Blasen und/oder Sollbruchstellen ermöglichen. Im praktischen Einsatz wird für eine ausreichende Haftfestigkeit zwischen der Deckschicht und der Schaumstoffschicht eine untere Grenze von 0,20 N/mm² (gemessen in Anlehnung an DIN 53292) als kritische Grenze angesehen. Aufgabe ist es somit, die Haftfestigkeit zwischen der Deckschicht und der Schaumstoffschicht auf ein möglichst hohes Niveau zu bringen bei gleichzeitig möglichst geringer Menge an eingesetzten Haftvermittler.

Überraschend wurde gefunden, dass die erfindungsgemäße Aufgabe gelöst wird durch ein Verfahren zur Herstellung eines Schaumstoff-Verbundelements, umfassend die Schritte:
A) Bereitstellen einer Deckschicht;
B) Auftragen einer Haftvermittlerschicht auf die Deckschicht, wobei die Haftvermittlerschicht ein modifiziertes Isocyanat umfasst;
C) Auftragen einer Polyurethan und/oder Polyisocyanurat umfassenden Schaumstoffschicht auf die Haftvermittlerschicht
dadurch gekennzeichnet, dass das modifizierte Isocyanat in der Haftvermittlerschicht beim Auftragen einen Gehalt an freien Isocyanatgruppen von ≥ 10% bis ≤ 29%, bevorzugt ≥ 10% bis ≤ 25% aufweist.

Die Angabe des Gehalts an freien Isocyanatgruppen erfolgt jeweils in Gewichtsprozent bezogen auf die Menge an eingesetztem Isocyanat.

Es wurde gefunden, dass durch den Einsatz eines erfindungsgemäßen modifizierten Isocyanats als Haftvermittler die Haftung des Schaums an der Deckschicht gegenüber bekannten Systemen verbessert werden konnte. Insbesondere ermöglicht die Verwendung von modifizierten Isocyanaten in Form von Prepolymeren, also Ein-Komponentensystemen gemäß der üblichen Terminologie, unzureichende Mischungsverhältnisse beim Einsatz von ZweiKomponentensystemen zu vermeiden. Unzureichend gemischte Haftvermittlersysteme würden zur Blasenbildung oder zu Sollbruchstellen im Verbundmaterial führen. Vorteilhafterweise ermöglicht die Verwendung von modifizierten Isocyanaten in Form von Prepolymeren auch eine ganzflächige Benetzung der Deckschicht.

Die erfindungsgemäß hergestellten Schaumstoff-Verbundelemente eignen sich insbesondere als Wärmedämmelemente.

Schritt A) des erfindungsgemäßen Verfahrens betrifft das Bereitstellen einer Deckschicht. Dieses kann in kontinuierlichen Produktionsanlagen beispielsweise durch Abwickeln einer aufgerollten Deckschicht von einer Rolle geschehen. Die Art der Deckschicht ist zunächst nicht weiter festgelegt, wobei bevorzugt die im Bereich der Wärmeisolierung üblicherweise eingesetzten Materialien für Deckschichten verwendet werden können. Die Dicke der Deckschicht kann beispielsweise ≥ 200 µm bis ≤ 5 mm, bevorzugt ≥ 300 µm bis ≤ 2 mm und besonders bevorzugt ≥ 400 µm bis ≤ 1 mm betragen.

In Schritt B) wird eine modifiziertes Isocyanat umfassende Haftvermittlerschicht auf die bereitgestellte Deckschicht aufgetragen. Das Auftragen kann mit üblichen Techniken wie beispielsweise Aufsprühen oder Rollen erfolgen. Bevorzugte modifizierte Isocyanate schließen ein: Harnstoff-modifizierte Isocyanate; Biuret-modifizierte Isocyanate; Urethan-modifizierte Isocyanate; Isocyanurat-modifizierte Isocyanate; Allophanat-modifizierte Isocyanate; Carbodiimidmodifizierte Isocyanate; Uretdion-modifizierte Isocyanate und Uretonimin-modifizierte Isocyanate. Solche modifizierten Isocyanate sind im Handel verfügbar und werden durch Reaktion eines Isocyanats mit einer geringeren als der stöchiometrischen Menge einer Isocyanat-reaktiven Verbindung oder mit sich selbst hergestellt. Beispielsweise können Harnstoff- und Urethan-modifizierte Isocyanate durch Reaktion von Di- oder Polyisocyanat mit geringeren Mengen Wasser oder eines Diamin oder mit einem Glykol jeweils hergestellt werden. Carbodiimid-, Uretonimin- und Isocyanurat-modifizierte Isocyanate werden durch Austauschreaktion von Isocyanaten mit sich selbst in der Gegenwart geeigneter Katalysatoren hergestellt.

Besonders bevorzugt als modifziertes Isocyanat ist ein Carbodiimid-modifiziertes oder Urethan-modifiziertes Isocyanat.

Ganz besonders bevorzugt als modifiziertes Isocyanat ist ein Urethan-modifiziertes Isocyanat. Ein Urethan-modifiziertes Isocyanat kann auch als Polyurethan-Prepolymer bezeichnet werden. Der Begriff "Prepolymer" wird hierbei in seiner üblichen Bedeutung verstanden. Der Begriff "Polyurethan-Prepolymer" bezeichnet insbesondere reaktive Intermediate in der Reaktion von Isocyanaten zu Polyurethan-Polymeren. Sie werden hergestellt durch die Reaktion einer Polyolkomponente mit einem Überschuss einer Isocyanatkomponente.

Bevorzugt wird die Isocyanatkomponente ausgewählt aus der Gruppe bestehend aus Tetramethylendiisocyanat, Methylpentamethylendiisocyanat, Hexamethylendiisocyanat-1,6, Dodecamethylendiisocyanat, 1,4-Diisocyanato-cyclohexan, 1-Isocyanato-3,3,5-trimethyl-5isocyanatomethyl-cyclohexan, 4,4'-Diisocyanatodicyclohexyl-methan, 4,4'-Diisocyanatodicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, p-Xylylendiisocyanat, 1,3- und 1,4-Diisocyantomethyl-benzol, sowie aus diesen Verbindungen bestehende Gemische. Besonders bevorzugt ist die Isocyanatkomponente Diphenylmethandiisocyanat.

Die Dicke der Haftvermittlerschicht kann beispielsweise ≥ 200 µm bis ≤ 5 mm, vorzugsweise ≥ 300 µm bis ≤ 2 mm und besonders bevorzugt ≥ 400 µm bis ≤ 1 mm betragen.

Der Einsatz von modifizierten Isocyanaten als Haftvermittler erlaubt Unterbrechungen bei der Produktion von Schaumstoff-Verbundelementen, ohne dass dadurch eine höhere Menge an Ausschuss produziert wird. Während konventionelle Haftvermittler auf Basis von 2-Komponentensystemen nach kurzer Zeit abreagiert sind, sind modifzierte Haftvermittler latent reaktiv. Vorteilhafterweise kann daher die Produktion von Schaumstoff-Verbundelementen angehalten werden, sofern Probleme im Produktionsprozess auftreten, ohne dass große Mengen an Material verworfen werden müssen.

In Schritt C) wird auf die Haftvermittlerschicht eine Polyurethan und/oder Polyisocyanurat umfassende Schaumstoffschicht aufgetragen. Auch dieses kann in einer kontinuierlichen Produktionsanlage geschehen. Diese Schicht kann zum Beispiel in einer Dicke von ≥ 2 cm bis ≤ 25 cm, von ≥ 5 cm bis ≤ 23 cm und vorzugsweise von ≥ 12 cm bis ≤ 20 cm vorliegen. Es können die Reaktionskomponenten erst unmittelbar vor dem Auftragen in einem Mischkopf vermischt werden und das zum Schaum führende Reaktionsgemisch unmittelbar auf die Haftvermittlerschicht aufgetragen werden. Alternativ kann die fertige Schaumstoffschicht aufgetragen, beispielsweise aufgelegt, werden. Insbesondere der Einsatz von Polyisocyanurat oder überwiegend Polyisocyanurat umfassenden Schäumen ist vorteilhaft, da diese auch mit einem reduzierten Gehalt an Flammschutzmitteln gute Flammschutzeigenschaften besitzen.

Zur Herstellung der Schaumstoffschicht kommen die üblichen aliphatischen, cycloaliphatischen und insbesondere aromatischen Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Als Verbindungen mit mindestens zwei gegenüber Isocyanat-Gruppen reaktiven Wasserstoffatomen kommen im Allgemeinen solche in Frage, die zwei oder mehrere reaktive Gruppen ausgewählt aus OH-Gruppen, SH-Gruppen, NH-Gruppen, NH₂-Gruppen und CH-aciden Gruppen wie β-Diketo-Gruppen im Molekül tragen. Vorzugsweise eingesetzt werden Polyetherole und/oder Polyesterole, wobei Polyetherpolyole bevorzugt sind. Die Hydroxylzahl der verwendeten Polyetherole und/oder Polyesterole beträgt vorzugsweise 25 bis 800 mg KOH/g, die Molmassen sind im Allgemeinen größer als 400 g/mol.

Erfindungsgemäß weist das modifizierte Isocyanat der Haftvermittlerschicht beim Auftragen einen Gehalt an freien Isocyanatgruppen ≥ 10% bis ≤ 29%, bevorzugt ≥ 10% bis ≤ 25% auf. Hierunter ist der Isocyanatgruppengehalt zu verstehen, wenn die Haftvermittlerschicht noch nicht mit der Schaumstoffschicht in Berührung gekommen ist. Besonders bevorzugt liegt der Gehalt an freien Isocyanatgruppen in einem Bereich von ≥ 12% bis ≤ 20%. Er lässt sich anhand der Norm DIN 53 185 bestimmen. Die Angabe des Gehalts an freien Isocyanatgruppen gibt den Gehalt im Moment des Auftragens auf die Deckschicht an.

In einer bevorzugten Ausführungsform weist die Schaumstoffschicht, wobei allgemein auch der Schaum der Schaumstoffschicht verstanden werden soll, eine Geschlossenzelligkeit von ≥ 85% bis ≤ 100%, vorzugsweise von ≥ 90% bis ≤ 100% auf, wobei die Geschlossenzelligkeit gemäß DIN ISO 4590 bestimmt wird. Vorzugsweise weist die Schaumstoffschicht einen mittleren Zelldurchmesser nach ASTM 3576-77 von ≥ 10 µm bis ≤ 600 µm, bevorzugt von ≥ 50 µm bis ≤ 400 µm, auf.

Im erfindungsgemäßen Verfahren können nach dem Schritt C) auf die Schaumstoffschicht eine weitere Haftvermittlerschicht wie in Schritt B) und daran anschließend eine weitere Deckschicht wie in Schritt A) beschrieben aufgetragen werden. Man erhält dann ein beidseitig mit einer Deckschicht versehenes Schaumstoff-Verbundelement. Das Verfahren kann beispielsweise in einer konventionellen Doppelbandanlage durchgeführt werden.

In einer Ausführungsform des erfindungsgemäßen Verfahrens umfasst das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten. Insbesondere bevorzugt ist es, wenn die Deckschicht Aluminium-Metall oder Stahl ist. Das Aluminium bzw. der Stahl können dabei beschichtet sein. Die erfindungsgemäß eingesetzten modifzierten Isocyanate, besonders Urethan-modifizierte Isocyanate, führen zu einer besonders guten Haftung insbesondere zwischen Polyisocyanurat-Schaumstoff und Aluminium-Deckschicht oder Stahl-Deckschicht.

In einer bevorzugten Ausführungsform des erfindungsgemäßen Verfahrens ist das Urethan-modifizierte Isocyanat in der Haftvermittlerschicht erhältlich aus der Reaktion von monomerem und/oder polymerem Diphenylmethandiisocyanat mit einem Polyetherpolyol, welches eine durchschnittliche Funktionalität von ≥ 2 bis ≤ 8, bevorzugt von ≥ 3 bis ≤ 8, besonders bevorzugt von ≥ 3 bis ≤ 6, hat, aufweist. Bevorzugt weist das Polyetherpolyol einen Gehalt an sekundären Hydroxylgruppen von ≥ 50 mol-% bis ≤ 100 mol-% auf. Beispielsweise kann ein Gemisch von monomeren Diphenylmethandiisocyanat und polymerem Diphenylmethandiisocyanat mit Mengenanteilen von ≥ 5 Gewichts-% bis ≤ 15 Gewichts-% des 2,4'-Isomeren,≥ 75 Gewichts-% bis ≤ 85 Gewichts-% des 4,4'-Isomeren sowie ≥ 5 Gewichts-% bis ≤ 15 Gewichts-% eines polymeren MDI einer Viskosität bei 25°C zwischen ≥ 100 mPas und ≤ 300 mPas eingesetzt werden. Hierbei addieren sich die Angaben der Gewichtsprozentanteile zu ≤ 100 Gewichts-%. Die Polyetherpolyolkomponente kann beispielsweise hergestellt werden durch die Addition von Propylenoxid und Ethylenoxid an Glycerin als Startermolekül. Der Anteil von Propylenoxid kann vorteilhafterweise ≥ 80 bis ≤ 95 Gewichts-% und der Anteil an Ethylenoxid kann vorteilhafterweise ≥ 5 bis ≤ 20 Gewichts-% betragen. Der Anteil an sekundären Hydroxylgruppen im Polyetherpolyol kann besonders bevorzugt auch in einem Bereich von ≥ 60 mol-% bis ≤ 80 mol-% liegen.

Vorzugsweise wird gemäß dem erfindungsgemäßen Verfahren die Haftvermittlerschicht auf die Deckschicht in einer Menge von ≥ 20 g/m² bis ≤ 50 g/m² aufgetragen. Dieses stellt gegenüber bekannten Verfahren eine Verringerung der benötigten Menge an Haftvermittlerschicht dar. Überraschend wurde darüber hinaus gefunden, dass im erfindungsgemäßen Verfahren eine optimale Haftung erreicht wird, wenn die Menge der auf die Deckschicht aufgetragenen Haftvermittlerschicht in einem Bereich von ≥ 30 g/m² bis ≤ 40 g/m² liegt (vergleiche die in Tabelle 2 dargestellten Ergebnisse).

In einer bevorzugten Ausführungsform des erfindungsgemäßen Verfahrens wird die Deckschicht nach dem Auftragen der Haftvermittlerschicht und des Reaktionsgemisches zum Herstellen der Schaumstoffschicht auf eine Temperatur von ≥ 30 °C bis ≤ 70 °C, besonders bevorzugt von ≥ 40 °C bis ≤ 60 °C, höchst bevorzugt ≥ 45 °C bis ≤ 55 °C erwärmt. Durch das Erwärmen der Deckschicht wird die Reaktion in der Haftvermittlerschicht beschleunigt und insgesamt eine festere Verbindung erhalten.

In einer weiteren bevorzugten Ausführungsform des erfindungsgemäßen Verfahrens ist die Schaumstoffschicht erhältlich aus der Reaktion eines Polyisocyanate und wenigstens eine Verbindung ausgewählt aus der Gruppe bestehend aus Polyesterpolyolen und Polyetherpolyolen umfassenden Reaktionsgemisches, wobei im Reaktionsgemisch zu Beginn der Reaktion das molare Verhältnis von Isocyanat-Gruppen zu Hydroxyl-Gruppen ≥ 1:1 bis ≤ 5:1 beträgt. Mit anderen Worten ausgedrückt, beträgt der Index dieser Reaktionsmischung 100 bis 500. Der Index kann auch ≥ 150 bis ≤ 350 oder ≥ 200 bis ≤ 300 betragen. Bei solchen Kennzahlen werden überwiegend Polyisocyanuratschäume erhalten, welche wie bereits ausgeführt mit geringeren Mengen an Flammschutzmitteln auskommen und durch das erfindungsgemäße Verfahren dennoch fest an Deckschichten, insbesondere Aluminiumdeckschichten, angebunden werden können. Der Polyisocyanuratschaumstoff ist vorzugsweise ein Hartschaumstoff, definiert anhand seiner Druckspannung bei 10% Stauchung beziehungsweise von ≥ 100 kPa bis ≤ 300 kPa. Diese Druckspannung oder Druckfestigkeit kann gemäß DIN 53421/DIN EN ISO 604 bestimmt werden. Sie kann auch in einem Bereich von ≥ 150 kPa bis ≤ 250 kPa oder von ≥ 180 kPa bis ≤ 280 kPa liegen.

Vorzugsweise beträgt im erfindungsgemäßen Verfahren die Rohdichte der Schaumstoffschicht ≥ 25 g/l bis ≤ 48 g/l, besonders bevorzugt ≥ 35 g/l bis ≤ 45 g/l. Die Rohdichte der Schaumstoffschicht wird anhand der Norm ISO 845 bestimmt. In einer höchst bevorzugten Ausführungsform beträgt die Rohdichte der Schaumstoffschicht ≥ 37 g/l bis ≤ 42 g/l, noch weiter bevorzugt ≥ 39 g/l bis ≤ 40 g/l. Unabhängig davon ist es weiterhin auch möglich, dass die Schaumstoffschicht, wobei allgemein auch der Schaum der Schaumstoffschicht verstanden werden soll, eine Geschlossenzelligkeit von ≥ 85% bis ≤ 100%, vorzugsweise von ≥ 90% bis ≤ 100% auf, wobei die Geschlossenzelligkeit gemäß DIN ISO 4590 bestimmt wird. Weiterhin weist die Schaumstoffschicht vorzugsweise einen mittleren Zelldurchmesser nach ASTM 3576-77 von ≥ 10 µm bis ≤ 600 µm, besonders bevorzugt von ≥ 50 µm bis ≤ 400 µm, aufweisen.

Die vorliegende Erfindung betrifft weiterhin die Verwendung eines modifizierten Isocyanats mit einem Gehalt an freien Isocyanatgruppen von ≥ 10% bis ≤ 29%, bevorzugt ≥ 10% bis ≤ 25%, besonders bevorzugt ≥ 12% bis ≤ 20% als Haftvermittler in der Herstellung von Schaumstoff-Verbundelementen. Details zu dem modifizierten Isocyanat wurden bereits vorstehend beschrieben, so dass hierauf in vollem Umfang Bezug genommen werden kann.

In einer Ausführungsform der erfindungsgemäßen Verwendung ist Urethan-modifizierte Isocyanat erhältlich aus der Reaktion von monomerem und/oder polymerem Diphenylmethandiisocyanat mit einem Polyetherpolyol, welches eine durchschnittliche Funktionalität von ≥ 2 bis ≤ 8, bevorzugt von ≥ 2 bis ≤ 6, besonders bevorzugt von ≥ 2 bis ≤3, aufweist. Auch hierzu wird bezüglich der Details auf das vorstehend Beschriebene Bezug genommen.

### Beispiele

Die vorliegende Erfindung wird anhand der nachfolgenden Beispiele näher beschrieben werden.

### Beispiel 1: Herstellung des modifizierten Isocyanats

Unter Rühren wurde für zwei Stunden bei 95 °C ein Gemisch aus 527,0 g eines Isocyanats aus 10,0 Gewichts-% 2,4'- Diphenylmethandiisocyanat, 80,0 Gewichts-% 4,4'-Diphenylmethandiisocyanat und 10,0 Gewichts-% eines polymeren MDI der Viskosität 200 mPa s bei 25 °C 472,0 g eines Polyetherpolyols einer OH-Zahl von 46 mg KOH/g, hergestellt durch Addition von 90 Gewichts-% Propylenoxid und 10 Gewichts-% Ethylenoxid an Glycerin als Startermolekül mit überwiegend sekundären Hydroxylgruppen, zur Umsetzung gebracht. Der ermittelte Gehalt an freien Isocyanatgruppen betrug 15,3 %. Die Viskosität bei 25 °C betrug 1600 mPas.

### Beispiel 2:

Die Herstellung des modifizierten Isocyanats erfolgte gemäß Beispiel 1. Es wurden 483,0 g des Isocyanatgemisches aus Beispiel 1 mit 347,0 g eines Polyetherpolyols der OH-Zahl von 28 mg KOH/g hergestellt durch Addition von 81 Gewichts-% Propylenoxid und 19 Gew.% Ethylenoxid an Sorbit als Starter mit überwiegend primären Hydroxylgruppen zur Umsetzung gebracht. Der ermittelte Gehalt an freien Isocyanatgruppen betrug 18,0 %. Die Viskosität bei 25 °C betrug 1100 mPas.

### Beispiel 3:

Die Herstellung des modifizierten Isocyanats erfolgte gemäß Beispiel 1. Es wurden 450,0 g des Isocyanatgemisches aus Beispiel 1 mit 550,0 g des Polyetherpolyols aus Beispiel 1 zur Umsetzung gebracht. Der ermittelte Gehalt an freien Isocyanatgruppen betrug 12,1 %. Die Viskosität bei 25 °C betrug 3856 mPas.

### Beispiel 4:

Die Herstellung des modifizierten Isocyanats erfolgte gemäß Beispiel 1. Es wurden 700,0 g des Isocyanatgemisches aus Beispiel 1 mit 300,0 g des Polyetherpolyols aus Beispiel 1 zur Umsetzung gebracht. Der ermittelte Gehalt an freien Isocyanatgruppen betrug 21,1 %. Die Viskosität bei 25 °C betrug 425 mPas.

### Beispiel 4A:

Die Herstellung des modifizierten Isocyanats erfolgte gemäß Beispiel 1. Es wurden 700,0 g eines carbodiimidisierten 4,4'-Diisocyanatodiphenylmethan mit einem NCO-Gehalt von 29,5 % sowie einem Carbodiimidgehalt von 23 % und 300 g eines Polyetherpolyols der OH-Zahl 46, hergestellt durch Addition von 90 Gew.-% Propylenoxid und 10 Gew.-% Ethylenoxid an Glycerin als Starter mit überwiegend sekundären OH-Gruppen, zur Umsetzung gebracht. Der ermittelte Gehalt an freien Isocyanatgruppen betrug 19,5 %. Die Viskosität bei 25 °C betrug 635 mPas.

### Beispiel 5 (Vergleich):

100 g eines Isocyanatgemisches aus Beispiel 1 wurden zu 1547,0 g eines Polyetherpolyols der OH-Zahl 56 mg KOH/g hergestellt durch Addition von 100 Gew.-% Propylenoxid an Ethylenglycol als Starter getropft und das Reaktionsgemisch für 2 h bei 95 °C erhitzt. Es sind keine freien NCO-Gruppen mehr nachweisbar. Die Viskosität bei 25 °C betrug 5497 mPas.

### Beispiel 6: Herstellung des modifizierten Isocyanats

Unter Rühren wurde für zwei Stunden bei 95 °C ein Gemisch aus 2640,0 g des Isocyanatgemisches aus Beispiel 1 360,0 g des Polyetherpolyols aus Beispiel 1 zur Umsetzung gebracht. Der ermittelte Gehalt an freien Isocyanatgruppen betrug 27,8 %. Die Viskosität bei 25 °C betrug 96 mPas.

### Beispiel 7: Herstellung des modifizierten Isocyanats

Unter Rühren wurde für zwei Stunden bei 95 °C ein Gemisch aus 969,0 g des Isocyanatgemisches aus Beispiel 1 2031,0 g des Polyetherpolyols aus Beispiel 1 zur Umsetzung gebracht. Der ermittelte Gehalt an freien Isocyanatgruppen betrug 7,8 %. Die Viskosität bei 25 °C betrug 13491 1 mPas.

### Beispiele 8 bis 16:

Die jeweilige Haftvermittlerzusammensetzung wurde auf ein auf 40 °C vorgewärmtes Aluminiumblech mit einer Vorrichtung, wie sie in EP 1 593 438 A2 beschrieben wird, aufgetragen. Die jeweils eingesetzte Menge an Haftvermittler ist in Tabelle 1 angegeben.

Anschließend wurde hierauf ein Polyisocyanuratschaum aufgetragen mit folgender Zusammensetzung:
A-Komponente:
   39 Teile Polyetheresterol 1 aus Phthalsäureanhydrid, Diethylenglycol und Ethylenglycol mit einer Funktionalität von 2, einer Hydroxylzahl von 310 mg KOH/g. 15,7 Teile Polyetherol 1 aus Propylenglycol, Propylenoxid und Ethylenoxid mit einer Funktionalität von 2 und einer Hydroxylzahl von 28 mg KOH/g;
   12 Teile Polyetherol 2 aus Zucker, Ethylenglycol und Propylenoxid mit einer Funktionalität von 3 und einer Hydroxylzahl von 380 mg KOH/g;
   25 Teile Flammschutzmittel 1 (Trischlorisopropylphosphat, TCPP);
   5 Teile Stabilisator 1 (silikonhaltiger Stabilisator);
   3,5 Teile Katalysator 1 (PIR-Katalysator, Salz einer Carbonsäure);
   2,5 Teile Polyesterol 1 (aus Phthalsäureanhydrid und Diethylenglycol);
   2,5 Teile Katalysator 2 (aminhaltiger Polyurethankatalysator);
   Treibmittel 1 (n-Pentan), Treibmittel 2 (Wasser);
B-Komponente:
   Desmodur 44V70L (polymeres MDI, erhältlich von Bayer Material Science AG)

Es wurde die Haftfestigkeit in Anlehnung an die Norm DIN 53292 überprüft. Die Durchführung unterscheidet sich dabei vom Zugversuch senkrecht zur Deckschichtebene nach DIN 53292-82 durch die unterschiedliche Probendicke und Anzahl der Deckschichten. Beim Versuch nach DIN 53292-82 wird die gesamte Dicke der Deckschichten zugrunde gelegt. Dabei bestimmt der schwächste Bereich der Gesamtprobe den Bruchort. Demgegenüber erlaubt der Haftversuch in der hier beschriebenen Abwandlung eine seitenbezogene Beurteilung der Haftung.

Zur Probenentnahme wird daher ein Verbundelement senkrecht zu den Deckschichten geschnitten. Bei der Messung werden quadratische Proben verwendet, deren Seitenlänge 50 mm und deren Probenhöhe 15 mm (einschließlich der Deckschicht) beträgt.
Ebenfalls wurde die Blasenbildung nach Temperung bei 105 °C für 1 h überprüft.

**Tabelle 1: Variation des eingesetzten Haftvermittlers**

| Beispiel | Haftvermittler gemäß Beispiel | Auftragsmenge [g/m²] | Haftung [N/mm²] auf der Unterseite | Blasenbildung |
|---|---|---|---|---|
| 8 | 1 | 50 | 0,22 | Keine |
| 9 | 2 | 50 | 0,23 | Keine |
| 10 | 3 | 50 | 0,24 | Keine |
| 11 | 4 | 50 | 0,21 | Keine |
| 12 | 4A | 50 | 0,23 | Keine |
| 13 (Vgl.) | 5 | 50 | --¹⁾ | Vorhanden |
| 14 | 6 | 45 | 0,21 | Keine |
| 15 (Vgl) | 7 | --²⁾ | --²⁾ | --²⁾ |
| 16 (Vgl.) | Polymeres MDI³⁾ | 50 | Keine Haftung ⁴⁾ | --⁴⁾ |

| | | | | |
|---|---|---|---|---|
| 1) Nicht vermessen wegen auftretender Blasenbildung 2) Prepolymere nicht zu applizieren aufgrund der zu hohen Viskosität. 3) Als Haftvermittler wurde Desmodur 44V70L (polymeres MDI, erhältlich von Bayer Material Science AG , der ermittelte Gehalt an freien Isocyanatgruppen betrug 31,0 % ) eingesetzt. 4) Es wurde keinerlei Haftung festgestellt, sowohl unmittelbar nach der Verschäumung wie auch 24 h nach der Verschäumung löst sich die Deckschicht ohne messbare Haftung vom Polyisocyanuratschaum ab. Vgl = Vergleichsbeispiel | | | | |

Es wurde weiterhin beobachtet, dass im erfindungsgemäßen System nach Wärmelagerung des Schaumstoffverbundelements bei 105 °C für 1 Stunde der Grenzbereich zwischen Schaum und Deckschicht im Bereich der unteren Deckschicht blasenfrei war. Wenn kein Haftvermittler eingesetzt wurde bzw. bei unzureichender Vermischung von 2K-Haftvermittlern, kam es während der Wärmelagerung im Bereich der unteren Deckschicht zu einer unerwünschten Blasenbildung.

### Beispiele 17 bis 22:

Das modifizierte Isocyanat gemäß Beispiel 1 wurde als Haftvermittler verwendet und die eingesetzte Menge an Haftvermittler wurde variiert. Die Haftvermittlerzusammensetzung wurde auf ein auf 40 °C vorgewärmtes Aluminiumblech mit einer Vorrichtung, wie sie in EP 1 593 438 A2 beschrieben wird, aufgetragen. Die eingesetzte Menge an Haftvermittler ist wie in Tabelle 2 angegeben.

Anschließend wurde hierauf ein Polyurethanschaum aufgetragen mit folgender Zusammensetzung:
A-Komponente:
   31 Teile Polyetheresterpolyol 1 aus Phthalsäureanhydrid, Diethylenglycol, Sorbit und Propylenoxid mit einer Funktionalität von 5, einer Hydroxylzahl von 435 mg KOH/g.
   10 Teile Polyesterpolyol 1 aus Phthalsäureanhydrid, Adipinsäure, Ölsäure und Trimethylolpropan mit einer Funktionalität von 6,2 und einer Hydroxylzahl von 370 mg KOH/g;
   7 Teile Polyetherpolyol 1 aus Trimethylolpropan und Propylenoxid mit einer Funktionalität von 3 und einer Hydroxylzahl von 380 mg KOH/g;
   3 Teile Polyetherpolyol 2 aus Toluoylendiamin und Ethylenoxid und Propylenoxid mit einer Funktionalität von 4 und einer Hydroxylzahl von 420 mg KOH/g;
   12 Teile Polyetherpolyol mit Halogenanteilen aus Dibrombutendiol und Epichlorhydrin mit einer Funktionalität von 3 und einer Hydroxylzahl von 235 mg KOH/g;
   31 Teile Flammschutzmittel 1 (Trischlorisopropylphosphat, TCPP);
   3,5 Teile Glycerin;
   2 Teile OS 340 (silikonhaltiger Stabilisator, erhältlich von Bayer Material Science AG);
   2,5 Teile Desmorapid 1792 (PIR-Katalysator, Salz einer Carbonsäure, erhältlich von Bayer Material Science AG);
   3,5 Teile Desmorapid VP 1221 VN (aminhaltiger Polyurethankatalysator, erhältlich von Bayer Material Science AG);
   Treibmittel 1 (n-Pentan)
   Treibmittel 2 (Wasser);
B-Komponente:
   Desmodur 44V70L (polymeres MDI, erhältlich von Bayer Material Science AG)

Die Haftfestigkeit wurde wie vorstehend beschrieben getestet.

**Tabelle 2. Variation der Menge an Haftvermittler (Prepolymer gemäß Beispiel 1)**

| Beispiel | Haftvermittler gemäß | Auftragsmenge [g/m²] | Haftung [N/mm²] auf der Unterseite |
|---|---|---|---|
| 17 | Beispiel 1 | 25 | 0,39 |
| 18 | Beispiel 1 | 30 | 0,42 |
| 19 | Beispiel 1 | 32 | 0,58 |
| 20 | Beispiel 1 | 40 | 0,45 |
| 21 | Beispiel 1 | 45 | 0,40 |
| 22 | Beispiel 1 | 50 | 0,40 |

## Patentansprüche

1. Verfahren zur Herstellung eines Schaumstoff-Verbundelements, umfassend die Schritte:
A) Bereitstellen einer Deckschicht;
B) Auftragen einer Haftvermittlerschicht auf die Deckschicht, wobei die Haftvermittlerschicht ein modifiziertes Isocyanat umfasst;
C) Auftragen einer Polyurethan und/oder Polyisocyanurat umfassenden Schaumstoffschicht auf die Haftvermittlerschicht;
wobei das modifiziertes Isocyanat in der Haftvermittlerschicht beim Auftragen einen Gehalt an freien Isocyanatgruppen von ≥ 10% bis ≤ 29% aufweist.

2. Verfahren gemäß Anspruch 1, wobei das modifiziertes Isocyanat in der Haftvermittlerschicht beim Auftragen einen Gehalt an freien Isocyanatgruppen von ≥ 10% bis ≤ 25% aufweist.

3. Verfahren gemäß Anspruch 1, wobei das Material der Deckschicht Aluminium, Stahl, Bitumen, Papier, Mineral-Vliesstoffe, organische Fasern umfassende Vliesstoffe, Kunststoff-Platten, Kunststoff-Folien und/oder Holzplatten umfasst.

4. Verfahren nach Anspruch 1, wobei das modifizierte Isocyanat ein modifiziertes Isocyanat ausgewählt aus der Gruppe bestehend aus Harnstoff-modifizierten Isocyanaten; Biuret-modifizierten Isocyanaten; Urethan-modifizierten Isocyanaten; Isocyanurat-modifizierten Isocyanaten; Allophanat-modifizierten Isocyanaten; Carbodiimid-modifizierten Isocyanaten; Uretdion-modifizierten Isocyanaten und Uretonimin-modifizierte Isocyanaten ist.

5. Verfahren nach Anspruch 4, wobei das modifizierte Isocyanat ein Carbodiimid-modifiziertes oder Urethan-modifiziertes Isocyanat ist.

6. Verfahren gemäß Anspruch 5, wobei das Urethan-modifizierte Isocyanat in der Haftvermittlerschicht erhältlich ist aus der Reaktion von monomerem und/oder polymerem Diphenylmethandiisocyanat mit einem Polyetherpolyol, wobei das Polyetherpolyol eine durchschnittliche Funktionalität von ≥ 2 bis ≤ 8 hat.

7. Verfahren gemäß Anspruch 1, wobei die Haftvermittlerschicht auf die Deckschicht in einer Menge von ≥ 20 g/m² bis ≤ 50 g/m² aufgetragen wird.

8. Verfahren gemäß Anspruch 1, wobei die Haftvermittlerschicht auf die Deckschicht in einer Menge von ≥ 30 g/m² bis ≤ 40 g/m² aufgetragen wird.

9. Verfahren gemäß Anspruch 1, wobei die Schaumstoffschicht erhältlich ist aus der Reaktion eines Polyisocyanate und wenigstens einer Verbindung ausgewählt aus der Gruppe bestehend Polyesterpolyolen und Polyetherpolyolen umfassenden Reaktionsgemisches, wobei im Reaktionsgemisch zu Beginn der Reaktion das molare Verhältnis von Isocyanat-Gruppen zu Hydroxyl-Gruppen ≥ 1:1 bis ≤ 5:1 beträgt.

10. Verfahren gemäß Anspruch 1, wobei die Rohdichte der Schaumstoffschicht ≥ 25 g/l bis ≤ 48 g/l beträgt.

11. Verfahren gemäß Anspruch 1, wobei in Schritt A) das Material der Deckschicht Aluminium, Stahl, Papier, Kunststoff-Platten, Kunststoff-Folien und/oder Holzplatten umfasst, in Schritt B) die Haftvermittlerschicht ein Urethan-modifiziertes Isocyanat erhältlich aus der Reaktion von monomerem und/oder polymerem Diphenylmethandiisocyanat mit einem Polyetherpolyol ist, und wobei die Haftvermittlerschicht auf die Deckschicht in einer Menge von ≥ 20 g/m² bis ≤ 50 g/m² aufgetragen wird.

12. Verwendung eines modifizierten Isocyanats mit einem Gehalt an freien Isocyanatgruppen von ≥ 10% bis ≤ 29% als Haftvermittler zwischen der Deckschicht und der Polyurethan und/oder Polyisocyanurat umfassenden Schaumstoffschicht in der Herstellung von Schaumstoff-Verbundelementen.

13. Verwendung gemäß Anspruch 12, wobei das modifizierte Isocyanat ein modifiziertes Isocyanat ausgewählt aus der Gruppe bestehend aus Harnstoff-modifizierten Isocyanaten; Biuret-modifizierten Isocyanaten; Urethan-modifizierten Isocyanaten; Isocyanurat-modifizierten Isocyanaten; Allophanat-modifizierten Isocyanaten; Carbodiimid-modifizierten Isocyanaten; Uretdion-modifizierten Isocyanaten und Uretonimin-modifizierte Isocyanaten ist.

14. Verwendung gemäß Anspruch 12, wobei das modifizierte Isocyanat ein Carbodiimid-modifiziertes oder Urethan-modifiziertes Isocyanat ist.

15. Verwendung gemäß Anspruch 14, wobei das Urethan-modifizierte Isocyanat erhältlich ist aus der Reaktion von monomerem und/oder polymerem Diphenylmethandiisocyanat mit einem Polyetherpolyol, welches eine durchschnittliche Funktionalität von ≥ 2 bis ≤ 8 hat, aufweist.

## Claims

1. A method for preparing a foam composite element, including the steps of:
A) preparing a top layer;
B) applying an adhesion promoter layer to the top layer, wherein the adhesion promoter layer includes a modified isocyanate; and
C) applying a foam layer including polyurethane and/or polyisocyanurate to the adhesion promoter layer;
in which, on application, the modified isocyanate in the adhesion promoter layer has a content of free isocyanate groups of from ≥ 10% to ≤ 29%.

2. A method according to Claim 1, in which, on application, the modified isocyanate in the adhesion promoter layer has a content of free isocyanate groups of from ≥ 10% to ≤ 25%.

3. A method according to Claim 1, in which the material of the top layer includes aluminium, steel, bitumen, paper, mineral nonwovens, nonwovens including organic fibres, synthetic panels, synthetic films and/or timber panels.

4. A method according to Claim 1, in which the modified isocyanate is a modified isocyanate selected from the group comprising urea-modified isocyanates; biuret-modified isocyanates; urethane-modified isocyanates; isocyanurate-modified isocyanates; allophanate-modified isocyanates; carbodiimide-modified isocyanates; uretdione-modified isocyanates and uretonimine-modified isocyanates.

5. A method according to Claim 4, in which the modified isocyanate is a carbodiimide-modified or urethane-modified isocyanate.

6. A method according to Claim 5, in which the urethane-modified isocyanate in the adhesion promoter layer may be obtained by reacting monomeric and/or polymeric diphenylmethane diisocyanate with a polyether polyol, the polyether polyol having an average functionality of from ≥ 2 to ≤ 8.

7. A method according to Claim 1, in which the adhesion promoter layer is applied to the top layer in a quantity of from ≥ 20 g/m² to ≤ 50 g/m².

8. A method according to Claim 1, in which the adhesion promoter layer is applied to the top layer in a quantity of from ≥ 30 g/m² to ≤ 40 g/m².

9. A method according to Claim 1, in which the foam layer may be obtained by reacting a reaction mixture that includes polyisocyanates and at least one compound selected from the group comprising polyester polyols and polyether polyols, wherein the molar ratio of isocyanate groups to hydroxyl groups in the reaction mixture at the start of the reaction is from ≥ 1:1 to ≤ 5:1.

10. A method according to Claim 1, in which the apparent density of the foam layer is from ≥ 25 g/l to ≤ 48 g/l.

11. A method according to Claim 1, in which in step A) the material of the top layer includes aluminium, steel, paper, synthetic panels, synthetic films and/or timber panels, in step B) the adhesion promoter layer is a urethane-modified isocyanate which may be obtained by reacting monomeric and/or polymeric diphenylmethane diisocyanate with a polyether polyol, and in which the adhesion promoter layer is applied to the top layer in a quantity of from ≥ 20 g/m² to ≤ 50 g/m².

12. Use of a modified isocyanate having a content of free isocyanate groups of from ≥ 10% to ≤ 29% as an adhesion promoter between the top layer and the foam layer, which includes polyurethane and/or polyisocyanurate, in the preparation of foam composite elements.

13. Use according to Claim 12, in which the modified isocyanate is a modified isocyanate selected from the group comprising urea-modified isocyanates; biuret-modified isocyanates; urethane-modified isocyanates; isocyanurate-modified isocyanates; allophanate-modified isocyanates; carbodiimide-modified isocyanates; uretdione-modified isocyanates and uretonimine-modified isocyanates.

14. Use according to Claim 12, in which the modified isocyanate is a carbodiimide-modified or urethane-modified isocyanate.

15. Use according to Claim 14, in which the urethane-modified isocyanate may be obtained by reacting monomeric and/or polymeric diphenylmethane diisocyanate with a polyether polyol having an average functionality of from ≥ 2 to ≤ 8.

## Revendications

1. Procédé pour la fabrication d'un élément composite en mousse, comprenant les étampes :
A) mise à disposition d'une couche de recouvrement ;
B) application d'une couche de promoteur d'adhérence sur la couche de recouvrement, la couche de promoteur d'adhérence comprenant un isocyanate modifié ;
C) application d'une couche de mousse comprenant du polyuréthane et/ou du polyisocyanurate sur la couche de promoteur d'adhérence ;
l'isocyanate modifié dans la couche de promoteur d'adhérence présentant, lors de l'application, une teneur en groupes isocyanate libres ≥ 10% à ≤ 29%.

2. Procédé selon la revendication 1, l'isocyanate modifié dans la couche de promoteur d'adhérence présentant, lors de l'application, une teneur en groupes isocyanate libres ≥ 10% à 25%.

3. Procédé selon la revendication 1, le matériau de la couche de recouvrement comprenant de l'aluminium, de l'acier, du bitume, du papier, des non-tissés minéraux, des non-tissés comprenant des fibres organiques, des panneaux en matériau synthétique, des feuilles en matériau synthétique et/ou des panneaux en bois.

4. Procédé selon la revendication 1, l'isocyanate modifié étant un isocyanate modifié choisi dans le groupe constitué par les isocyanates modifiés par urée ; les isocyanates modifiés par biuret ; les isocyanates modifiés par uréthane ; les isocyanates modifiés par isocyanurate ; les isocyanates modifiés par allophanate ; les isocyanates modifiés par carbodiimide ; les isocyanates modifiés par uretdione et les isocyanates modifiés par urétone-imine.

5. Procédé selon la revendication 4, l'isocyanate modifié étant un isocyanate modifié par carbodiimide ou modifié par uréthane.

6. Procédé selon la revendication 5, l'isocyanate modifié par uréthane dans la couche de promoteur d'adhérence pouvant être obtenu par la réaction de diisocyanate de diphénylméthane monomère et/ou polymère avec un polyétherpolyol, le polyétherpolyol présentant une fonctionnalité moyenne ≥ 2 à ≤ 8.

7. Procédé selon la revendication 1, la couche de promoteur d'adhérence étant appliquée sur la couche de recouvrement en une quantité ≥ 20 g/m² à ≤ 50 g/m².

8. Procédé selon la revendication 1, la couche de promoteur d'adhérence étant appliquée sur la couche de recouvrement en une quantité ≥ 30 g/m² à ≤ 40 g/m².

9. Procédé selon la revendication 1, la couche de mousse pouvant être obtenue à partir de la réaction d'un polyisocyanate et d'au moins un composé choisi dans le groupe constitué par les mélanges réactionnels comprenant des polyesterpolyols et des polyétherpolyols, le rapport molaire des groupes isocyanate aux groupes hydroxyle dans le mélange réactionnel au début de la réaction étant ≥ 1:1 à ≤ 5:1.

10. Procédé selon la revendication 1, la densité brute de la couche de mousse étant ≥ 25 g/l à ≤ 48 g/l.

11. Procédé selon la revendication 1, où, dans l'étape A), le matériau de la couche de recouvrement comprend de l'aluminium, de l'acier, du papier, des panneaux en matériau synthétique, des feuilles en matériau synthétique et/ou des panneaux en bois, dans l'étape B), la couche de promoteur d'adhérence est un isocyanate modifié par uréthane pouvant être obtenu à partir de la réaction de diisocyanate de diphénylméthane monomère et/ou polymère avec un polyétherpolyol, et la couche de promoteur d'adhérence est appliquée sur la couche de recouvrement en une quantité ≥ 20 g/m² à ≤ 50 g/m².

12. Utilisation d'un isocyanate modifié présentant une teneur en groupes isocyanate libres ≥ 10% à ≤ 29% comme promoteur d'adhérence entre la couche de recouvrement et la couche de mousse comprenant du polyuréthane et/ou du polyisocyanurate lors de la fabrication d'éléments composites en mousse.

13. Utilisation selon la revendication 12, l'isocyanate modifié étant un isocyanate modifié choisi dans le groupe constitué par les isocyanates modifiés par urée ; les isocyanates modifiés par biuret ; les isocyanates modifiés par uréthane ; les isocyanates modifiés par isocyanurate ; les isocyanates modifiés par allophanate ; les isocyanates modifiés par carbodiimide ; les isocyanates modifiés par uretdione et les isocyanates modifiés par urétone-imine.

14. Utilisation selon la revendication 12, l'isocyanate modifié étant un isocyanate modifié par carbodiimide ou modifié par uréthane.

15. Utilisation selon la revendication 14, l'isocyanate modifié par uréthane pouvant être obtenu à partir de la réaction de diisocyanate de diphénylméthane monomère et/ou polymère avec un polyétherpolyol, qui présente une fonctionnalité moyenne ≥ 2 à ≤ 8.
